(19) Europäisches Patentamt / European Patent Office / Office européen des brevets

(11) **EP 2 439 820 B1**

(12) # FASCICULE DE BREVET EUROPEEN

(45) Date de publication et mention
de la délivrance du brevet:
**02.10.2013 Bulletin 2013/40**

(51) Int Cl.:
*H01S 3/067* [(2006.01)]   *H01S 3/102* [(2006.01)]
*H01S 3/117* [(2006.01)]   *H01S 3/131* [(2006.01)]

(21) Numéro de dépôt: **11007932.4**

(22) Date de dépôt: **29.09.2011**

(54) **Procédé de génération d'un rayonnement laser de courte durée, de moins de 100ns, à une cadence élevée, de plus de 50kHz**

Verfahren zur Erzeugung eines Laserstrahls von kurzer Dauer, unter 100 ns, und einer hohen Frequenz, grösser als 50 kHz

Method for generating a laser beam with short duration of less than 100 ns and high frequency of more than 50 kHz

(84) Etats contractants désignés:
**CH DE DK FR GB LI**

(30) Priorité: **05.10.2010 FR 1003940**

(43) Date de publication de la demande:
**11.04.2012 Bulletin 2012/15**

(73) Titulaire: **Institut Franco-Allemand de Recherches de Saint-Louis**
**68301 Saint-Louis Cedex (FR)**

(72) Inventeurs:
• **Kieleck, Christelle F.**
**68510 Sierentz (FR)**
• **Eichhorn, Marc D.**
**79736 Rickenbach (DE)**

(56) Documents cités:
FR-A1- 2 885 265

• KIELECK C ET AL: "OP-GaAs OPO pumped by a Q-switched Tm,Ho:silica fiber laser", LASERS AND ELECTRO-OPTICS, CONFERENCE ON QUANTUM ELECTRONICS AND LASER SCIENCE CONFERENCE. CLEO/QELS 2009, 2 juin 2009 (2009-06-02), pages 1-2, XP031521103, IEEE, PISCATAWAY, NJ, USA ISBN: 978-1-55752-869-8

• DEGUIL-ROBIN N ET AL: "Rod-type fiber laser", OSA TRENDS IN OPTICS AND PHOTONICS SERIES - OSA TRENDS IN OPTICS AND PHOTONICS SERIES - ADVANCED SOLID-STATE PHOTONICS, ASSP 2005, vol. 98, 2005, pages 511-515, XP002655774, PROCEEDINGS 2005 OPTICAL SOCIETY OF AMERICA US

• LIMPERT J ET AL: "High performance ultrafast fiber laser systems", LASERS AND ELECTRO-OPTICS SOCIETY, 18TH ANNUAL MEETING-LEOS 2005, vol. 2005, 2005, pages 627-628, XP002652899, IEEE, USA DOI: 10.1109/LEOS.2005.1548161

• LIMPERT J ET AL: "Ultrafast high power fiber laser systems", COMPTES RENDUS - PHYSIQUE, vol. 7, no. 2, 1 mars 2006 (2006-03-01), pages 187-197, XP024978848, ELSEVIER, PARIS, FR ISSN: 1631-0705, DOI: 10.1016/J.CRHY.2006.01.016 [extrait le 2006-03-01]

• DATABASE INSPEC [Online] THE INSTITUTION OF ELECTRICAL ENGINEERS, STEVENAGE, GB; 2008, EICHHORN M ET AL: "High-pulse-energy, actively Q-switched Tm<3+>,Ho<3+>-codoped silica 2 [mu]m fiber laser", XP001514587, Database accession no. 10033510 & Optics Letters Optical Society of America USA, vol. 33, no. 10 , pages 1044-1046, ISSN: 0146-9592, DOI: 10.1364/OL.33.001044

- EICHHORN M ET AL: "HIGH-PULSE-ENERGY ACTIVELY Q-SWITCHED TM3+-DOPED SILICA 2 .MU.M FIBER LASER PUMPED AT 792 NM", OPTICS LETTERS, OSA, OPTICAL SOCIETY OF AMERICA, WASHINGTON, DC, US, vol. 32, no. 19, 1 October 2007 (2007-10-01), pages 2780-2782, XP001508098, ISSN: 0146-9592, DOI: 10.1364/OL. 32.002780

**Description**

La présente invention concerne le domaine des dispositifs laser à fibre déclenchés.

Le principe de production d'impulsions lasers de forte intensité et de courte durée par déclenchement consiste à empêcher l'amplification d'une onde dans une cavité contenant un milieu laser en introduisant des pertes supérieures au gain du milieu laser. Après une période de pompage permettant de stocker une énergie importante dans le milieu à gain, la transmission optique du déclencheur est brusquement augmentée afin de permettre la création d'une onde intra-cavité qui s'amplifie très rapidement et donne lieu à l'émission d'une impulsion lumineuse. La durée des impulsions produites est proportionnelle à la longueur de la cavité laser, et inversement proportionnelle au gain du milieu laser. Généralement, une source laser comporte un faisceau de pompage, un milieu à gain, par exemple sous la forme d'un barreau ou d'une fibre optique dopée et un déclencheur.

Le facteur de qualité Q d'une telle cavité laser décrit sa capacité à emmagasiner de l'énergie lumineuse sous la forme d'ondes stationnaires. Le facteur Q est le rapport entre l'énergie contenue dans la cavité et l'énergie perdue après chaque tour dans la cavité :

$$Q = \frac{\text{Energie stockée dans la cavité}}{2\pi \ \text{Energie perdue pendant un cycle}}$$

Les lasers dits Q-switchés occupent une large place dans la famille des lasers impulsionnels. Cette technique de génération d'impulsions permet en effet d'obtenir de fortes puissances crêtes, indispensables dans de nombreuses applications, en particulier industrielles. Les dispositifs déclencheurs utilisés, appelés Q-switches, sont des dispositifs intra-cavité qui peuvent être électro-optiques, acousto-optiques ou à absorbants saturables. Ils ont des pertes intrinsèques minimum (transmission passive), une capacité à créer des pertes maximum en mode actif, une forte tenue au flux laser et une vitesse d'obturation élevée.

L'insertion au sein de la cavité laser d'un tel dispositif permettant de contrôler les pertes de la cavité permet de faire varier le facteur de qualité Q.

Ce composant agit comme un interrupteur optique ou switch optique à l'intérieur de la cavité, dont l'activation permet de faire varier le Q de la cavité, d'où son nom de Q-switch.

Quand l'interrupteur est fermé, la lumière est arrêtée, absorbée ou déviée (faible Q et cavité à fortes pertes), quand il est ouvert, la lumière n'est plus obturée, la cavité est à faibles pertes (fort Q).

L'utilisation de fibres optiques dont le coeur est dopé avec un ion présentant une transition laser permet de produire des faisceaux lumineux de très bonne qualité et de puissance moyenne. Ces systèmes présentent une zone active relativement petite (typiquement moins de 10 micromètres de diamètre) et fonctionnent principalement en continu afin d'éviter l'endommagement de la fibre par des impulsions laser à forte énergie, le seuil de dommage étant d'environ 25 à 50 J/cm2 pour des impulsions de 10 ns).

Pour les applications de contre-mesures optroniques, les faisceaux utiles dans l'infrarouge moyen sont obtenus par conversion non linéaire dans des composants optiques. Des impulsions courtes (de quelques dizaines de nanosecondes) à haute cadence de répétition (supérieure à 50 kHz) sont nécessaires. Ces impulsions courtes à haute cadence sont aussi nécessaires pour la détection de substances par spectroscopie ou pour des applications médicales.

Pour générer des durées d'impulsions variant de quelques nanosecondes à quelques centaines de nanosecondes, le principe utilisé consiste à déclencher une cavité laser : pendant la phase de pompe, on empêche, par une obturation optique, l'oscillation laser dans la cavité, c'est-à-dire que l'on abaisse le facteur de qualité, Q, de la cavité. En commutant le coefficient de qualité du résonateur à sa valeur initiale, le flux de photons croit très rapidement dans la cavité, l'inversion est libérée et une impulsion est générée. Cette technologie est maîtrisée depuis longtemps pour les lasers solides.

Cette technologie présente l'inconvénient qu'à très haute cadence, pour un laser à cristal solide, c'est-à-dire pour un laser présentant un gain faible, seules des impulsions longues de quelques centaines de nanosecondes peuvent être générées. Pour générer des impulsions courtes, on doit accroître le gain du milieu laser et ceci est possible avec une fibre laser pour milieu actif. Cependant, les forts gains mis alors en jeu empêchent de bloquer efficacement la cavité pendant la phase de pompe et la forte amplification nécessaire ne peut pas être atteinte.

Ainsi, la modulation active des lasers à fort gain ne peut pas reposer sur cette technologie et un autre procédé doit être mis en oeuvre : le modulateur est réglé pour que la cavité laser soit alignée au moment où le modulateur est activé. Il s'agit donc d'ajuster l'un des miroirs de la cavité laser sur le faisceau dévié par le modulateur actif. Afin de minimiser les pertes, il est nécessaire d'utiliser un modulateur ayant un bon coefficient de déflection.

En utilisant le matériau TeO2, des rendements de déflection de 70- 85% peuvent être atteints. De tels rendements de déflection ne suffisent pourtant pas pour les lasers à fibres, tel par exemple que celui décrit dans le brevet US7, 120, 174, et comme des pertes résiduelles subsistent, même à des cadences basses autour de la vingtaine de kHz, des impulsions relativement longues de l'ordre de 125 ns sont générées.

Pour résoudre en partie ces inconvénients, on connaît des lasers à fibres à couches photoniques ou MPF qui comportent des amplificateurs optiques à fibre en verre formée d'un coeur dopé et d'au moins une gaine périphérique qui assure le guidage d'onde produite. Le coeur est dopé par un ion de terre rare, Néodyme ou Ytterbium en général. Le guidage est assuré par la mise en oeuvre d'une structure photonique obtenue par un ensemble géométrique de canaux ou capillaires aériques (trous). Cette structure abaisse artifciellement l'indice rencontré par l'onde produite et permet des propagations monomodes pour des diamètres de coeur de fibre de l'ordre de $50\mu$m. Ce diamètre de coeur important permet d'étaler l'énergie de l'onde produite sur une plus grande surface et de repousser les deux limitations fondamentales des amplificateurs à fibre que sont la tenue au flux et les effets non-linéaires. Avec une telle technologie on peut envisager de produire des impulsions laser relativement brèves de 1ns à 30ns avec des énergies de l'ordre de 1mJ à 10mJ.

Ces lasers MPF peuvent présenter des gains extrêmement importants grâce au très fort confinement de la zone de gain. Ce confinement impose habituellement une longueur d'absorption longue et une limitation forte dans l'énergie produite par déclenchement. Toutefois il est très difficile de maintenir des pertes supérieures au gain pendant la période de pompage. On a cependant pu montrer qu'on pouvait utiliser des fibres photoniques particulières pour à la fois diminuer la longueur d'absorption et augmenter la taille de la zone active. Ainsi, il est connu de la demande EP1878096 que Limpert et al. (conférence "Advanced Solid-State Photonics," Vienne, février 2005) ont utilisé une de ces fibres afin de produire des impulsions nanosecondes de forte énergie. Néanmoins, ils eurent recours à un déclenchement très rapide (5ns) par cellule de Pockels afin de bloquer la cavité durant la phase de pompage. Le laser est alors limité à des cadences de l'ordre de 100 kHz et le système de déclenchement est particulièrement onéreux. De plus le système est sensible à la polarisation de l'onde se propageant dans le résonateur et son efficacité peut être diminuée par la dépolarisation lors de la propagation dans la fibre. »

Pour résoudre ces inconvénients, on connaît la demande de brevet FR2885265, de la même famille de brevets que la demande EP 1878096, qui décrit un dispositif laser déclenché à fibre photonique permettant de produire des impulsions très courtes (inférieure à 30 ns), tout en maintenant une qualité de faisceau proche de la limite de diffraction et des puissances moyennes très élevées (supérieure à 50 W, voir plusieurs centaines de W). Pour cela, un dispositif de production cyclique d'impulsions lasers de courte durée, selon cette demande de brevet comporte un résonateur laser de longueur optique inférieure à 2m comprenant deux extrémités réfléchissantes et incorporant un milieu laser pompé en continu par au moins une onde de pompe issue de diodes lasers semiconducteurs de puissances focalisée par des moyens optiques de collimation dans une extrémité du milieu laser, le milieu laser étant un milieu où un faisceau laser interne est guidé et possédant un gain à très faible signal supérieur à 10 par passage dans le milieu à gain, le résonateur laser incorporant également un modulateur optique, et il est caractérisé en ce que le modulateur optique peut défléchir l'axe du faisceau laser interne, ledit modulateur optique étant actionné par une commande électrique, selon deux directions stables, la première direction correspondant à un axe selon lequel le faisceau laser interne subit des pertes suffisantes pour empêcher que l'effet laser ne se déclenche, le dispositif étant alors dans un mode cavité ouverte, et la seconde direction correspondant à un axe selon lequel le faisceau laser interne est réfléchi sur lui-même au moins partiellement par un moyen optique de renvoi fermant le résonateur à une première de ses extrémités, le dispositif étant alors dans un mode cavité fermée, la seconde extrémité du résonateur laser étant fermée par un moyen au moins partiellement réfléchissant situé de l'autre côté du milieu amplificateur, le modulateur possédant un temps de commutation supérieur au temps mis par la lumière pour parcourir la cavité et qu'il est utilisé dans une configuration où le facteur de perte qu'il introduit dans l'état correspondant au mode cavité ouverte est supérieur au gain à très faible signal du résonateur.

Ce dispositif ne résout qu'une partie des inconvénients de l'état de la technique et limite la longueur de la fibre à 2 mètres et nécessite d'utiliser préférentiellement les fibres MPF ce qui d'une part limite la surface de refroidissement de la fibre et donc la puissance émise et, d'autre part, oblige à augmenter le rayon de courbure des fibres pour diminuer les pertes ce qui conduit à un dispositif volumineux.

On connaît également le document de M. Eichhorn et S.D. Jackson, "High-pulse-energy actively Q-Switched Tm3+- doped silica $2\mu$m fiber laser pumped at 792nm", Optics Letters, Vol. 32, No. 19, 1.10.2007 qui présente un dispositif laser comprenant une fibre laser enroulée selon un diamètre de 25cm, pompée par diodes laser et servant de milieu à gain dans une cavité laser où est disposé un modulateur acousto-optique. En mode pulsé, pour des longueurs d'onde de 1930nm à 2050nm, des impulsions de 41 ns à 50ns, pour des cadences de 125kHz sont produites.

Le document de M. Eichhorn et S.D. Jackson, "High- pulse- energy, actively Q- Switched Tm3+, Ho3+- codoped silica $2\mu$m fiber laser", Optics Letters, Vol. 33, No. 10, 15.05.2008, pour un dispositif semblable, à la fibre optique à gain près, permet des tirs autour de 2017.8nm ou 2072.7nm de 65ns à 50kHz.

Le but de l'invention est de résoudre les inconvénients de l'état de la technique en proposant un procédé de génération d'un rayonnement laser de courte durée, mis en oeuvre par un dispositif simple et compact de génération d'un rayonnement laser comportant une source laser de pompage et une cavité délimitée par des miroirs et renfermant une fibre laser comportant au moins une spire et un modulateur piloté par des moyens de contrôle, ce procédé étant apte à générer des impulsions courtes (inférieures à 100ns) à haute cadence (supérieure à 50kHz).

La solution apportée est un procédé de génération d'un rayonnement laser apte, notamment, à générer un rayonnement de courte durée (inférieure à 100ns) de puissance moyenne P et à une cadence ou fréquence de modulation Fm supérieure à 50kHz, procédé mis en oeuvre par un dispositif de génération d'un rayonnement laser comportant une source laser de pompage et une cavité délimitée par des miroirs et renfermant une fibre laser comportant au moins une spire et un modulateur piloté par des moyens de contrôle, ce procédé comportant les étapes suivantes :

- donner à au moins une spire de la fibre un diamètre de la spire tel que la fréquence des fluctuations de la puissance laser mesurée en mode continu (CW) soit égale ou supérieure à ladite fréquence de modulation Fm;
- générer des impulsions lasers de courte durée à ladite fréquence de modulation Fm en :

   * maintenant haut le facteur de qualité de la cavité,
   *pilotant le modulateur de sorte que la fréquence de modulation Fm du modulateur soit inférieure ou égale à la fréquence des fluctuations de la puissance laser mesurée en mode continu (CW).

Si le modulateur est de type électro-optique, le maintien du facteur de qualité haut peut être obtenu que le modulateur soit éteint ou en fonctionnement.

Si le modulateur est de type acousto-optique, pour maintenir le facteur de qualité haut, la cavité laser doit être fermée, l'effet laser étant établi quand le modulateur lui-même est éteint, la cavité étant résonante sur le faisceau non-défléchi. Contrairement à l'usage, le facteur de qualité de la cavité est maintenu haut lorsque le modulateur est inactif et c'est seulement lorsqu'il est activé que le coefficient de qualité de la cavité est réduit. L'amplification est significative si les modulations des pertes sont importantes. Cette utilisation non commune ne suffit cependant pas à générer des impulsions brèves. C'est lorsqu'elle est associée à une géométrie particulière de l'enroulement de la fibre qu'elle permet de générer des impulsions courtes.

Se rajoutant aux avantages déjà mentionnés concernant les impulsions brèves, il faut mentionner un avantage supplémentaire à forte puissance de sortie: le fait d'utiliser le modulateur acousto-optique de manière à ce que son activation bloque la cavité implique qu'au moment de l'émission de l'impulsion (modulateur acousto-optique désactivé) il n'y a pas de pertes résiduelles dues au modulateur. Ceci augmente le rendement et permet de générer des impulsions encore plus brèves.

De plus, la configuration proposée dans cette invention implique qu'en désactivant complètement le modulateur acousto-optique le laser fonctionne en mode continu avec un rendement identique. Le laser peut fonctionner selon deux modes, continu et déclenché, sans modification de la configuration de la cavité. Ceci est impossible si ce modulateur est aligné de manière classique dans une cavité résonante avec le faisceau dévié.

Un tel fonctionnement donne lieu à un phénomène de résonance qui permet de stabiliser la génération des impulsions. Dans un tel montage, la fibre peut être utilisée à des puissances largement supérieures au seuil laser et des impulsions brèves de dix à quelques dizaines de nanosecondes peuvent être générées.

Selon une caractéristique particulière, un procédé selon l'invention comporte une étape préalable de détermination d'un diamètre de spire de la fibre pour lequel la fréquence des fluctuations de la puissance laser mesurée en mode continu CW soit égale ou supérieure à ladite fréquence de modulation Fm, cette étape consistant :

soit à

- mesurer en mode continu (CW), pour au moins deux diamètres différents de spire de la fibre pompée par rayonnement continu de pompage et fonctionnant en mode continu pour fournir un rayonnement de puissance moyenne P, la puissance P(t) du rayonnement émis en fonction du temps,
- déterminer, pour chacun des diamètres et à partir desdites mesures et par exemple par une transformation de Fourier rapide, la fréquence des fluctuations de la puissance laser mesurée en mode continu (CW),
- déterminer à partir des fréquences, déterminées en fonction des diamètres, des fluctuations de la puissance laser mesurée en mode continu (CW), un diamètre D de spire tel que la fréquence des fluctuations de la puissance laser mesurée en mode continu (CW) soit égale ou supérieure à ladite fréquence de modulation Fm, cette dernière devant être inférieure ou égale à la fréquence du premier pic des fréquences des fluctuations de la puissance laser mesurée en mode continu (CW) lorsqu'il existe plusieurs pics de fréquence de fluctuations pour ce diamètre D,

soit à

- calculer, de manière connue, pour différents diamètres de la spire et en fonction du diamètre du coeur, de sa nature et de son dopage, et de la nature de la gaine qui l'entoure, la fréquence de fluctuation de cette fibre émettant à une puissance moyenne P.

Selon une caractéristique particulière permettant de rendre plus compact un dispositif de mise en oeuvre d'un procédé selon l'invention, ce dernier comporte une étape consistant soit à intégrer le modulateur dans la fibre elle-même soit à coupler directement le modulateur à la fibre.

Selon une caractéristique particulière permettant d'augmenter le seuil de l'émission spontanée et mis en oeuvre par un dispositif comportant une cavité délimitée par un premier miroir hautement réfléchissant et un second miroir de sortie de la cavité, un procédé selon l'invention comporte une étape consistant à insérer un deuxième modulateur synchronisé avec le premier modulateur entre la fibre et le miroir de sortie.

Selon une caractéristique particulière, un procédé selon l'invention comporte une étape consistant à embobiner la fibre circulairement ou en spirale de sorte à former plusieurs spires avec un rayon constant et/ou avec un rayon variable à chaque tour.

Selon une autre caractéristique, un procédé selon l'invention comporte une étape consistant à utiliser une fibre dopée avec des ions Thulium, Holmium, Ytterbium, Praséodyme, Dysprosium, Néodyme ou Erbium, ou un mélange de ces ions et/ou avec des ions phosphore, germanium ou aluminium ou un mélange de ces ions.

Selon une caractéristique particulière, le premier modulateur est de type acousto-optique et l'étape de maintient haut du facteur de qualité de la cavité consiste à fermer la cavité laser et à éteindre le modulateur, la cavité étant alors résonante sur le faisceau non-défléchi.

L'invention concerne aussi un dispositif de génération d'un rayonnement laser apte, notamment, à générer un rayonnement de courte durée, inférieure à 100ns de puissance moyenne P et à une cadence ou fréquence de modulation Fm supérieure à 50kHz, procédé mis en oeuvre par un dispositif de génération d'un rayonnement laser comportant une source laser de pompage et une cavité délimitée par des miroirs et renfermant une fibre laser comportant au moins une spire et un modulateur piloté par des moyens de contrôle, ce dispositif étant caractérisé en ce que ladite au moins une spire comporte un diamètre pour lequel la fréquence des fluctuations de la puissance laser mesurée en mode continu CW est égale ou supérieure à ladite fréquence de modulation Fm

D'autres avantages et caractéristiques apparaîtront dans la description d'un mode de réalisation de l'invention au regard des figures 1 à 3 parmi lesquelles :

- la figure 1 montre un exemple d'un dispositif apte à mettre en oeuvre l'invention,
- la figure 2 présente un exemple simplifié et amplifié de résultats d'une mesure, pour un diamètre D donné et pour une puissance moyenne P, des fluctuations de la puissance P(t) en fonction du temps,
- la figure 3 montre une courbe représentant le spectre des fréquences de fluctuation en fonction de la fréquence après traitement des résultats de la figure 2 par une transformation de Fourier rapide.

La figure 1 montre un exemple d'un dispositif apte à mettre en oeuvre l'invention.

Ce dispositif comporte une source laser de pompage 8 et une cavité 1 délimitée par un premier miroir 6 hautement réfléchissant et un second miroir 7 de sortie de la cavité, une fibre laser 2 comportant plusieurs spires 9 de même diamètre D, une optique de transformation de faisceau optionnelle 3, un modulateur 4 piloté par des moyens de contrôle 12, une optique de transformation de faisceau optionnelle 5.

Ces optiques de transformation du faisceau sont optionnelles.

Les spires de la fibre laser 2 sont embobinées autour d'un mandrin 13 et comporte une partie rectiligne 10 à chaque de ses extrémités, l'une étant en regard du miroir de sortie 7 et l'autre en regard de optique de transformation de faisceau 3.

Le fonctionnement est décrit comme suit :

Les spires de la fibre laser 2 sont embobinées circulairement sur un rayon R et un miroir 7 de sortie de la cavité 1 est placé à une extrémité. Ce dernier fait intégralement partie de la fibre s'il s'agit par exemple d'une extrémité de la fibre polie ou s'il s'agit par exemple d'un réseau de Bragg inscrit dans la fibre.

L'autre extrémité de la fibre est couplée à une optique de transformation de faisceau optionnelle 3 qui modifie le faisceau émis par la fibre pour adapter le diamètre du faisceau dans le modulateur 4. Dans le cas d'un modulateur acousto-optique, le diamètre de faisceau par exemple détermine la vitesse de déclenchement de la cavité entre les deux états liés à un facteur de qualité haut ou bas. L'adaptation du diamètre du faisceau permet aussi d'éviter les dommages sur le modulateur lui-même dus à une trop forte intensité incidente.

Le modulateur 4 est intégré dans la cavité de telle manière qu'il génère deux états : dans le 1$^{er}$ état il n'y a pas de pertes générées par le modulateur pour la cavité laser puisse osciller. Dans le 2ème état des pertes additionnelles sont créées par exemple par déviation du faisceau dans un modulateur acousto-optique ou par des effets de polarisation du faisceau dans un modulateur électro-optique. Une optique de transformation de faisceau optionnelle 5 adapte le faisceau sur le miroir hautement réfléchissant 6.

En mode impulsionnel, un signal de modulation est transmis au modulateur pour moduler le facteur de qualité de la cavité avec une fréquence Fm.

Le rayon R est choisi de telle manière que la fréquence des fluctuations de la puissance laser mesurée en mode continu CW, soit proche ou supérieure à la fréquence de modulation Fm pour que le laser en mode impulsionnel se synchronise à cette fréquence.

Sans cet effet, le laser va aussi générer des impulsions par déclenchement standard avec la même fréquence de Fm mais ces impulsions seront plus longues (quelques centaines de nanosecondes), et il y aura des fluctuations en puissance crête impulsion à impulsion d'au moins 10%.

L'effet de la synchronisation joue à la fois sur la stabilité des impulsions qui s'améliore et sur la durée d'impulsion qui décroit rapidement à une valeur aussi petite que quelques dizaines de nanosecondes. Ceci est réalisé au moment où le coefficient de qualité de la cavité est bon, dû par exemple à une réflexion optimale du faisceau laser par le miroir 6. Cet effet est aussi couplé à une réduction du « jitter » entre les impulsions signifiant que le décalage temporel entre l'état « coefficient de qualité de la cavité haut » et l'émission d'impulsion (à peu près quelques microsecondes) devient constant d'une impulsion à l'autre (jusqu'à environ 10% de la durée de l'impulsion (ou moins) c'est-à-dire inférieur à 10 ns).

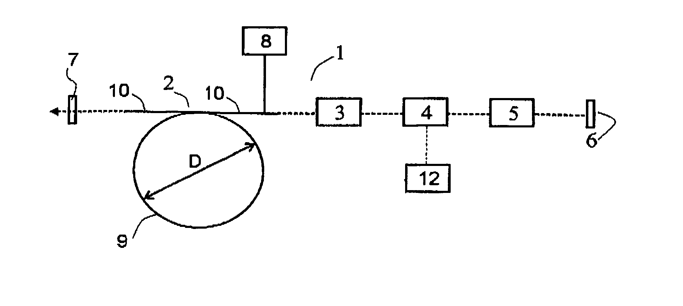

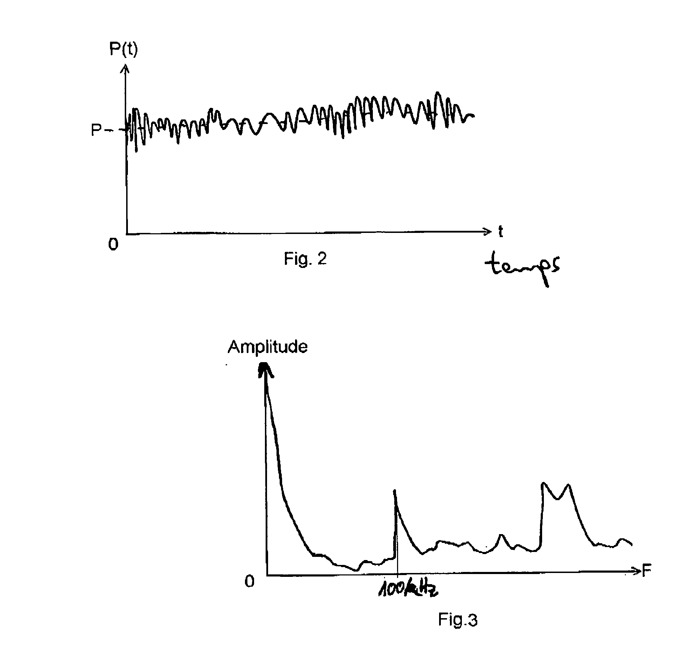

L'une des étapes du procédé consiste à mesurer en mode continu (CW), pour au moins deux diamètres différents de la spire pompée par rayonnement continu de pompage et fonctionnant en mode continu pour fournir un rayonnement de puissance moyenne P, la puissance P(t) du rayonnement émis en fonction du temps. Aussi, la figure 2 présente un exemple simplifié et amplifié de résultats d'une mesure en mode continu (CW), pour un diamètre D de la spire pompée par rayonnement continu de pompage et fonctionnant en mode continu pour fournir un rayonnement de puissance moyenne P, la puissance P(t) du rayonnement émis en fonction du temps.

On constate qu'il existe un bruit important et, qu'à partie de cette simple mesure, il n'est pas possible de déterminer s'il existe une fréquence d'émission survenant plus souvent.

La figure 3 montre une courbe représentant le spectre des fréquences de fluctuation en fonction de la fréquence après traitement des résultats de la figure 2 par une transformation de Fourier rapide. Cette courbe montre que la fréquence d'émission présente un premier pic à environ 100kHz et un second pic à 230-250kHz

Lorsqu'il existe plusieurs pics de fréquence d'émission pour ce diamètre D, la fréquence de modulation Fm du dispositif doit être choisie telle qu'elle soit inférieure ou égale à la fréquence du premier pic des fréquences des fluctuations de la puissance laser mesurée en mode continu (CW).

Bien évidemment, de nombreux dispositifs permettent la mise en oeuvre d'un procédé selon l'invention. A titre d'exemples :

- dans une première forme de réalisation, le modulateur peut être directement couplé à la fibre ou être intégré dans la fibre. Dans ce cas le modulateur est directement connecté à la fibre sans espace libre;
- dans une seconde forme de réalisation de l'invention un deuxième modulateur est inséré entre le miroir de sortie et la fibre active ; il bloque, pendant la phase de pompe, les rétro-réflections de ce miroir. Dans ce cas la fibre peut être pompée avec des niveaux d'amplifications encore plus élevés avant que l'émission spontanée ne se mette en place et limite l'amplification;
- dans une troisième forme de réalisation de l'invention le régime de fréquences propres des fluctuations de puissance de la fibre est présélectionné par un choix adapté de la réalisation de la fibre elle-même (diamètre de coeur, géométrie de la gaine, dopage actif, dopages additionnels, dans le coeur ou la gaine) pour que ce régime soit adapté aux bandes de fréquences des impulsions souhaitées.

## Revendications

1. Dispositif de génération d'un rayonnement laser à fibre optique et de type déclenché à générer un rayonnement de courte durée, inférieure à 100ns de puissance moyenne P et à une cadence ou fréquence de modulation Fm supérieure à 50kHz et comportant une source laser de pompage (8) et une cavité délimitée par des miroirs (6, 7) et renfermant une fibre laser (2) comportant au moins une spire et un modulateur (4) piloté par des moyens de contrôle (12), dispositif **caractérisé en ce que** ladite au moins une spire (9) comporte un diamètre pour lequel la fréquence des fluctuations de la puissance laser mesurée en mode continu, CW, est égale ou supérieure à ladite fréquence de modulation Fm.

2. Procédé de génération d'un rayonnement laser apte, notamment, à générer un rayonnement de courte durée, inférieure à 100ns de puissance moyenne P et à une cadence ou fréquence de modulation Fm supérieure à 50kHz, procédé mis en oeuvre par un dispositif de génération d'un rayonnement laser à fibre optique et de type déclenché comportant une source laser de pompage (8) et une cavité délimitée par des miroirs (6, 7) et renfermant une fibre laser (2) comportant au moins une spire (9) et un modulateur (4) piloté par des moyens de contrôle (12), ce procédé comportant les étapes suivantes :

- donner à au moins une spire (9) de la fibre (2) un diamètre de la spire tel que la fréquence des fluctuations de la puissance laser mesurée en mode continu, CW, soit égale ou supérieure à ladite fréquence de modulation Fm ;
- générer des impulsions lasers de courte durée à ladite fréquence de modulation Fm :

  *en maintenant élevé le facteur de qualité de la cavité ; et
  * en pilotant le modulateur (4) de sorte que la fréquence de modulation Fm du modulateur soit inférieure ou égale à la fréquence des fluctuations de la puissance laser mesurée en mode continu, CW.

3. Procédé selon la revendication 2, **caractérisé en ce qu'**il comporte une étape préalable de détermination d'un diamètre de spire de la fibre (2) pour lequel la fréquence des fluctuations de la puissance laser mesuré en mode continu CW soit égale ou supérieure à ladite fréquence de modulation Fm, cette étape consistant à:

- mesurer en mode continu CW, pour au moins deux diamètres différents de la spire (9) de la fibre (2) pompée par rayonnement continu de pompage et fonctionnant en mode continu pour fournir un rayonnement de puissance moyenne P, la puissance P(t) du rayonnement émis en fonction du temps ;
- déterminer, pour chacun des diamètres et à partir desdites mesures et par exemple par une transformation de fourier rapide, la fréquence des fluctuations de la puissance laser mesurée en mode continu, CW;
- à déterminer à partir des fréquences, déterminées en fonction des diamètres, des fluctuations de la puissance laser mesurée en mode continu CW un diamètre D de la spire tel que la fréquence des fluctuations de la puissance laser mesurée en mode continu, CW, soit égale ou supérieure à ladite fréquence de modulation Fm, cette dernière devant être inférieure ou égale à la fréquence du premier pic des fréquences des fluctuations de la puissance laser mesurée en mode continu, CW, lorsqu'il existe plusieurs pics de fréquence de fluctuations pour ce diamètre D.

4. Procédé selon la revendication 2 et 3, **caractérisé en ce qu'**il comporte une étape consistant soit à intégrer le modulateur (4) dans la fibre (2) elle-même soit à coupler directement le modulateur (4) à la fibre (2).

5. Procédé selon l'une quelconque des revendications 2 à 4, mis en oeuvre par un dispositif comportant une cavité délimitée par un premier miroir hautement réfléchissant et un second miroir de sortie de la cavité, un procédé selon l'invention comporte une étape consistant à insérer un deuxième modulateur synchronisé avec le premier modulateur entre la fibre (2) et le miroir de sortie (7).

6. Procédé selon l'une quelconque des revendications 2 à 5, **caractérisé en ce qu'**il comporte une étape consistant à embobiner la fibre circulairement ou en spirale de sorte à former plusieurs spires avec un rayon constant.

7. Procédé selon l'une quelconque des revendications 2 à 5, **caractérisé en ce qu'**il comporte une étape consistant à embobiner la fibre circulairement ou en spirale de sorte à former plusieurs spires (9) avec un rayon variable à chaque tour.

8. Procédé selon l'une quelconque des revendications 2 à 7, **caractérisé en ce qu'**il comporte une étape consistant à utiliser une fibre dopée avec des ions Thulium, Holmium, Ytterbium, Praséodyme, Dysprosium, Néodyme ou Erbium ou un mélange de ces ions.

9. Procédé selon l'une quelconque des revendications 2 à 8, **caractérisé en ce qu'**il comporte une étape consistant à utiliser une fibre dopée avec des ions phosphore, germanium ou aluminium ou un mélange de ces ions.

10. Procédé selon l'une quelconque des revendications 2 à 9, caractérisé en le premier modulateur est de type acousto-optique et en ce que l'étape de maintient élevé du facteur de qualité de la cavité consiste à fermer la cavité laser et à éteindre le modulateur, la cavité étant alors résonante sur le faisceau non-défléchi.

**Patentansprüche**

1. Vorrichtung zur Erzeugung einer gepulsten (q- switched) Laserstrahlung über Glasfaser zwecks Generierung einer Kurzzeitstrahlung mit einer mittleren Leistung P von unter 100 ns und einer Repetitionsrate bzw. Modulationsfrequenz Fm von über 50 kHz und bestehend aus einer Pumplaserquelle (8) und einem Resonator, der durch Spiegel (6, 7) abgegrenzt ist und eine Laserfaser (2) mit mindestens einer Windung und einem Modulator (4) mit Strahlführung mittels Steuermitteln (12) besitzt, **dadurch gekennzeichnet, dass** die genannte Windung (9) einen Durchmesser aufweist, bei dem die Schwankungsfrequenz der im Dauerstrichbetrieb (CW) gemessenen Laserleistung größer oder gleich der genannten Modulationsfrequenz Fm ist.

2. Verfahren zur Erzeugung einer Laserstrahlung, insbesondere zwecks Generierung einer Kurzzeitstrahlung mit einer mittleren Leistung P von unter 100 ns und einer Repetitionsrate bzw. Modulationsfrequenz Fm von über 50 kHz, unter Einsatz einer Vorrichtung zur Erzeugung einer gepulsten (q- switched) Laserstrahlung über Glasfaser bestehend aus einer Pumplaserquelle (8) und einem Resonator, der durch Spiegel (6, 7) abgegrenzt ist und eine Laserfaser (2) mit mindestens einer Windung (9) und einem Modulator (4) mit Strahlführung mittels Steuermitteln (12) besitzt, wobei dieses Verfahren folgende Phasen umfasst:

   - Ausstattung von mindestens einer Windung (9) der Faser (2) mit einem Windungsdurchmesser, bei dem die Schwankungsfrequenz der im Dauerstrichbetrieb (CW) gemessenen Laserleistung größer oder gleich der genannten Modulationsfrequenz Fm ist.
   - Erzeugung von kurzzeitigen Laserimpulsen bei der genannten Modulationsfrequenz Fm, wobei

     • ein hoher Qualitätsfaktor des Resonators sichergestellt wird und
     • der Modulator (4) so gesteuert wird, dass die Modulationsfrequenz Fm des Modulators kleiner oder gleich der Schwankungsfrequenz der Laserleistung im Dauerstrichbetrieb (CW) ist.

3. Verfahren nach Anspruch 2, **dadurch gekennzeichnet, dass** eine Vorphase zur Bestimmung eines Windungsdurchmessers der Faser (2) existiert, bei dem die Schwankungsfrequenz der Laserleistung im Dauerstrichbetrieb (CW) größer oder gleich der genannten Modulationsfrequenz Fm ist, wobei diese Phase folgende Stufen umfasst:

   - Messung im Dauerstrichbetrieb (CW) der Strahlungsleistung P(t) in Abhängigkeit von der Zeit für mindestens zwei unterschiedliche Durchmesserwerte der Windung (9) der mittels Dauer-Pumpstrahlung gepumpten Faser (2) im Dauerstrichbetrieb zur Bereitstellung einer Strahlung mit der mittleren Leistung P;
   - Ermittlung der Schwankungsfrequenz der im Dauerstrichbetrieb (CW) gemessenen Laserleistung für jeden Durchmesserwert anhand der durchgeführten Messungen, beispielsweise durch eine Schnelle Fourier-Transformation;
   - Bestimmung eines Windungsdurchmessers D anhand von je nach Durchmesser festgelegten Schwankungsfrequenzen der Laserleistung im Dauerstrichbetrieb (CW), so dass die Schwankungsfrequenz der im Dauerstrichbetrieb (CW) gemessenen Laserleistung größer oder gleich der Modulationsfrequenz Fm ist, wobei dieser Wert kleiner oder gleich der Frequenz des ersten Peaks der Schwankungsfrequenzen der Laserleistung im Dauerstrichbetrieb (CW) ist, wenn mehrere Schwankungsfrequenzpeaks für diesen Durchmesser D auftreten.

4. Verfahren nach Anspruch 2 oder 3, **dadurch gekennzeichnet, dass** dieses Verfahren eine Phase entweder zur Integrierung des Modulators (4) in die Faser (2) oder zur direkten Kopplung des Modulators (4) mit der Faser (2) aufweist.

5. Verfahren nach einem beliebigen der vorhergehenden Ansprüche 2 bis 4, unter Einsatz einer Vorrichtung mit einem Resonator, der durch einen ersten hochreflektierenden Spiegel und einen zweiten Spiegel am Resonatorausgang abgegrenzt ist, wobei ein erfindungsgemäßes Verfahren eine Phase zur Integrierung eines zweiten Modulators, der mit dem ersten Modulator synchronisiert ist, zwischen Faser (2) und Ausgangsspiegel (7) aufweist.

6. Verfahren nach einem beliebigen der vorhergehenden Ansprüche 2 bis 5, **dadurch gekennzeichnet, dass** dieses Verfahren eine Phase zur kreis- oder spiralförmigen Umwicklung der Faser zwecks Bildung mehrerer Windungen mit konstantem Radius aufweist.

7. Verfahren nach einem beliebigen der vorhergehenden Ansprüche 2 bis 5, **dadurch gekennzeichnet, dass** dieses Verfahren eine Phase zur kreis- oder spiralförmigen Umwicklung der Faser zwecks Bildung mehrerer Windungen (9) mit jeweils unterschiedlichem Radius bei jeder Wicklung aufweist.

8. Verfahren nach einem beliebigen der vorhergehenden Ansprüche 2 bis 7, **dadurch gekennzeichnet, dass** dieses Verfahren eine Phase unter Einsatz einer mit Thulium-, Holmium-, Ytterbium-, Praseodym-, Dysprosium-, Neodym- oder Erbium-Ionen bzw. mit einer Mischung dieser Ionen dotierten Faser aufweist.

9. Verfahren nach einem beliebigen der vorhergehenden Ansprüche 2 bis 8, **dadurch gekennzeichnet, dass** dieses Verfahren eine Phase unter Einsatz einer mit Phosphor-, Germanium- oder Aluminium-Ionen bzw. mit einer Mischung dieser Ionen dotierten Faser aufweist.

10. Verfahren nach einem beliebigen der vorhergehenden Ansprüche 2 bis 9, **dadurch gekennzeichnet, dass** der erste Modulator ein akusto-optischer Modulator ist und dass die Phase zur Sicherstellung eines hohen Qualitätsfaktors des Resonators das Schließen des Laserresonators und das Ausschalten des Modulators bewirkt, wobei der Resonator auf den nicht abgelenkten Laserstrahl resonierend wirkt.

**Claims**

1. Device for generating a pulsed (q- switched) laser radiation via optical fibre by producing a short- term radiation with a mean power P of less than 100 ns and a repetition rate or a modulation frequency Fm of more than 50 kHz, consisting of a pump laser source (8) and a cavity limited by mirrors (6, 7) and containing a laser fibre (2) with at least one winding and a modulator (4) guided by means of control (12), **characterized in that** the mentioned winding (9) has a diameter for which the frequency of fluctuation of the laser power measured in continuous wave mode (CW) is greater or equal to the mentioned modulation frequency Fm.

2. Method for generating a laser radiation by producing a short- term radiation with a mean power P of less than 100 ns and a repetition rate or a modulation frequency Fm of more than 50 kHz, put into practice by using a device for generating pulsed (q- switched) laser radiation via optical fibre consisting of a pump laser source (8) and a cavity limited by mirrors (6, 7) and containing a laser fibre (2) with at least one winding (9) and a modulator (4) guided by means of control (12), whereas this method comprises the following steps:

   - supplying at least one winding (9) of the fibre (2) with a diameter for which the frequency of fluctuation of the laser power measured in continuous wave mode (cw) is greater or equal to the mentioned modulation frequency Fm;
   - generating short-time laser pulses at the mentioned modulation frequency Fm:

      • by maintaining a high quality factor of the cavity, and
      • by controlling the modulator (4) so as to obtain a modulation frequency Fm of the modulator that is lower or equal to the frequency of fluctuation of the laser power measured in continuous wave mode (CW).

3. Method according to claim 2, **characterized in that** there is a preliminary phase to determine a winding diameter of the fibre (2) for which the frequency of fluctuation of the laser power measured in continuous wave mode (CW) is greater or equal to the mentioned modulation frequency Fm, whereas this phase consists of the following steps:

   - measuring the radiation power P(t) as a function of time in continuous wave mode (CW) for at least two different diameter values of the winding (9) of the fibre (2) pumped by continuous pumping radiation and functioning in continuous wave mode to produce radiation with a mean power P;
   - determining the frequency of fluctuation of the laser power measured in continuous wave mode (CW) for each diameter value by taking into account the measurements made, for example by using Fast Fourier Transform (FFT);
   - determining a winding diameter D by taking into account the frequencies, based on the diameter values, of the fluctuations of the laser power measured in continuous wave mode (CW) so as to obtain a frequency of fluctuation of the laser power measured in continuous wave mode (CW) that is greater or equal to the modulation frequency Fm, whereas this value has to be lower or equal to the frequency of the first peak of the frequencies of fluctuation of the laser power measured in continuous wave mode (CW), if there are several peaks in the frequencies of fluctuation for this diameter D.

4. Method according to claim 2 and 3, **characterized in that** this method comprises a step of integrating the modulator (4) in the fibre (2) or of directly coupling the modulator (4) to the fibre (2).

5. Method according to any of the preceding claims 2 to 4, put into practice by using a device consisting of a cavity limited by a first highly reflecting mirror and a second cavity output mirror, whereas the method according to the invention comprises a step of integrating a second modulator synchronized with the first modulator between fibre (2) and output mirror (7).

6. Method according to any of the preceding claims 2 to 5, **characterized in that** this method comprises a step of circular or spiral fibre wrapping so as to form several windings having a constant radius.

7. Method according to any of the preceding claims 2 to 5, **characterized in that** this method comprises a step of circular or spiral fibre wrapping so as to form several windings (9) having a different radius at each turn.

8. Method according to any of the preceding claims 2 to 7, **characterized in that** this method comprises a step of including a fibre doped with thulium, holmium, ytterbium, praseodymium, dysprosium, neodym or erbium ions or with a mixture of these ions.

9. Method according to any of the preceding claims 2 to 8, **characterized in that** this method comprises a step of including a fibre doped with phosphorus, germanium or aluminium ions or with a mixture of these ions.

10. Method according to any of the preceding claims 2 to 9, **characterized in that** the first modulator is an acousto-optical modulator and that the step of maintaining a high quality factor of the cavity consists of closing the laser cavity and switching off the modulator, whereas the cavity has a resonance effect on the non-deviated laser beam.

P(t)

P—

0

Fig. 2

*temps*

Amplitude

0

*100kHz*

F

Fig.3

EP 2 439 820 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7120174 B
- EP 1878096 A, que Limpert
- FR 2885265

**Littérature non-brevet citée dans la description**

- **M. EICHHORN ; S.D. JACKSON.** High-pulse-energy actively Q-Switched Tm3+- doped silica 2$\mu$m fiber laser pumped at 792nm. *Optics Letters,* 01 Octobre 2007, vol. 32 (19
- **M. EICHHORN ; S.D. JACKSON.** High-pulse-energy, actively Q-Switched Tm3+,Ho3+ -codoped silica 2$\mu$m fiber laser. *Optics Letters,* 15 Mai 2008, vol. 33 (10